# EUROPEAN PATENT APPLICATION

(11) **EP 4 657 918 A1**
(43) Date of publication of application: **03.12.2025**
(21) Application number: 23922405.8
(22) Date of filing: 17.11.2023
(51) Int. Cl.: H04W 28/02

(54) **SERVICE PROCESSING METHOD AND RELATED APPARATUS**

(30) Priority: 15.02.2023 CN 202310140846
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Epping - Hermann - Fischer
(86) International application number: PCT/CN2023/132301
(87) International publication number: WO 2024/169289

(57) **Abstract**

A service processing method and a related apparatus provided in embodiments of this application relate to the field of communication technologies. The method includes: obtaining first information; and reporting a data information volume by using a first format based on the first information, where the first information indicates at least one of the following information: a first service flow is activated, reporting the data volume information by using the first format, and a first granularity corresponding to the first service flow. In this way, a transmission delay caused by a large data volume in the first service flow can be reduced, thereby improving user experience.

## Description

This application claims priority to Chinese Patent Application No. 202310140846.4, filed with the China National Intellectual Property Administration on February 15, 2023 and entitled "SERVICE PROCESSING METHOD AND RELATED APPARATUS", which is incorporated herein by reference in its entirety.

### TECHNICAL FIELD

This application relates to the communication field, and in particular, to a service processing method and a related apparatus.

### BACKGROUND

In wireless communication, an extended reality (extended reality, XR) service can provide a brand new visual experience for users, and is widely applied to a variety of fields.

In a data transmission process, the XR service may be used as a common service for data transmission. However, because a data volume of the XR service is large, a transmission delay of the XR service may be caused, degrading user experience.

### SUMMARY

According to a service processing method and a related apparatus provided in embodiments of this application, because a data volume of a first service flow is large, if data volume information cannot be reported at a time, a transmission delay of a first service may be increased. In this application, a first format is used for transmitting the data volume, so that the data volume information can be reported at a time, thereby improving user experience.

According to a first aspect, an embodiment of this application provides a service processing method. The method includes:
obtaining first information; and reporting a data information volume by using a first format based on the first information, where the first information indicates at least one of the following information: a first service flow is activated, reporting the data volume information by using the first format, and a first granularity corresponding to the first service flow. In this way, a transmission delay of the first service flow caused by a limited data volume transmitted by a short BSR format or a short truncated BSR format can be reduced, thereby improving user experience.

In a possible implementation, the data volume information in the first format occupies greater than or equal to eight bits; and the first format includes one or more correspondences, and any one of the correspondences includes a first granularity and data volume information.

In a possible implementation, data volume information in any one of the correspondences occupies greater than or equal to eight bits.

In a possible implementation, the first format includes any one of the following: an extended short BSR format, an extended short truncated BSR format, a long BSR format, and a long truncated BSR format.

In a possible implementation, the first format indicates at least any one of the following information: first granularity information; null bit information; third information; and delay information, where the third information corresponds to a second granularity.

In a possible implementation, the third information indicates at least one of the following content: a first indication, where the first indication indicates that delay information of the second granularity does not exist or is not reported; a second indication, where the second indication indicates that delay information of the second granularity exists or is reported; or the second granularity of the delay information reported.

In a possible implementation, the first format includes fourth information, where the fourth information corresponds to at least one second granularity, and the fourth information indicates at least one of the following content: a third indication, where the third indication indicates that delay information of the at least one second granularity does not exist or is not reported; or a fourth indication, where the fourth indication indicates that delay information of the at least one second granularity exists or is reported.

In a possible implementation, the reporting a data information volume by using a first format includes: reporting the data information volume by using the first format based on a first condition, where if the first condition is that data of one first granularity exists, a report in the first format includes one first correspondence; or if the first condition is that data of a plurality of first granularities exists, a report in the first format includes a plurality of first correspondences, where any one of the first correspondences includes one first granularity and data volume information.

In a possible implementation, the first condition includes: determining whether data of more than one first granularity among the first granularities corresponding to the first service flow indicated by the first information exists, where when the first information indicates that data of one first granularity among the first granularities corresponding to the first service flow exists, the first format including one first correspondence is used to report the data information volume; and when the first information indicates that data of a plurality of first granularities among the first granularities corresponding to the first service flow exists, the first format including a plurality of first correspondences is used to report the data information volume.

In a possible implementation, the method may further include: obtaining second information; and reporting the data information volume by using a second format based on the second information, where the second information indicates at least one of the following information: releasing the first information, and the first service flow is stopped.

In a possible implementation, the reporting the data information volume by using a second format includes: reporting the data information volume by using the second format based on a second condition, where if the second condition is that data of one first granularity exists, a report in the second format includes one second correspondence; or if the second condition is that data of a plurality of first granularities exists, a report in the second format includes a plurality of second correspondences, where any one of the second correspondences includes one first granularity and data volume information.

In a possible implementation, a manner of releasing the first information includes: setting need code of the first information to need R.

In a possible implementation, the first information is received from a receiving end.

In a possible implementation, the first information is determined by a sending end; and the first information is transmitted by a first protocol layer of the sending end to a second protocol layer of the sending end, where the first protocol layer is higher than the second protocol layer.

According to a second aspect, an embodiment of this application provides a service processing method. The method includes:
obtaining third information; and reporting the third information and/or delay information by using a third format, where the third information corresponds to a second granularity.

In a possible implementation, the third information indicates at least one of the following content: a first indication, where the first indication indicates that delay information of the second granularity does not exist or is not reported; a second indication, where the second indication indicates that delay information of the second granularity exists or is reported; or the second granularity corresponding to the delay information.

In a possible implementation, the third format includes fourth information, where the fourth information corresponds to at least one second granularity, and the fourth information indicates at least one of the following content: a third indication, where the third indication indicates that delay information of the at least one second granularity does not exist or is not reported; or a fourth indication, where the fourth indication indicates that delay information of the at least one second granularity exists or is reported.

In a possible implementation, the third format further includes fifth information and data volume information, where the fifth information corresponds to at least one first granularity.

In a possible implementation, the fifth information indicates at least one of the following content: a fifth indication, where the fifth indication indicates that data volume information of a first granularity indicated by the fifth information does not exist or is not reported; or a sixth indication, where the sixth indication indicates that data volume information of a first granularity indicated by the fifth information exists or is reported.

According to a third aspect, a service processing apparatus is provided, and is configured to perform the method in any one of the possible implementations of the first aspect. Specifically, the apparatus includes modules configured to perform the method in any one of the possible implementations of the first aspect.

According to a fourth aspect, another service processing apparatus is provided, and is configured to perform the method in any one of the possible implementations of the second aspect. Specifically, the apparatus includes modules configured to perform the method in any one of the possible implementations of the second aspect.

According to a fifth aspect, another service processing apparatus is provided in this application, including a processor, where the processor is coupled to a memory, and may be configured to execute instructions in the memory, to implement the method in any one of the possible implementations of the first aspect or the second aspect. Optionally, the apparatus further includes a memory. Optionally, the apparatus further includes a communication interface, and the processor is coupled to the communication interface.

In an implementation, the apparatus is an electronic device. When the apparatus is the electronic device, the communication interface may be a transceiver or an input/output interface.

In another implementation, the apparatus is a chip configured in an electronic device. When the apparatus is the chip configured in the electronic device, the communication interface may be an input/output interface.

According to a sixth aspect, a processor is provided, including: an input circuit, an output circuit, and a processing circuit. The processing circuit is configured to receive a signal through the input circuit, and transmit a signal through the output circuit, to cause the processor to perform the method in any one of the possible implementations of the first aspect or the second aspect.

In a specific implementation procedure, the processor may be a chip, the input circuit may be an input pin, the output circuit may be an output pin, and the processing circuit may be a transistor, a gate circuit, a trigger, a logic circuit of any type, or the like. An input signal received by the input circuit may be received and input by, for example, but not limited to, a receiver, and a signal output by the output circuit may be output to and transmitted by, for example, but not limited to, a transmitter. In addition, the input circuit and the output circuit may be a same circuit, and the circuit is separately used as the input circuit and the output circuit at different moments. Specific implementations of the processor and the various circuits are not limited in embodiments of this application.

According to a seventh aspect, a processing apparatus is provided, including a processor and a memory. The processor is configured to read instructions stored in the memory, and may receive a signal through a receiver and transmit a signal through a transmitter, to perform the method in any one of the possible implementations of the first aspect or the second aspect.

Optionally, there are one or more processors, and there are one or more memories.

Optionally, the memory may be integrated with the processor, or the memory and the processor are separately disposed.

In a specific implementation procedure, the memory may be a non-transitory (non-transitory) memory, such as a read-only memory (read only memory, ROM). The memory and the processor may be integrated on a same chip, or may be respectively disposed on different chips. A type of the memory and a manner of disposing the memory and the processor are not limited in this application.

It should be understood that a related data interaction procedure, for example, sending indication information, may be a procedure of outputting indication information from the processor, and receiving capability information may be a procedure of receiving input capability information by the processor. Specifically, data outputted by the processor may be outputted to the transmitter, and input data received by the processor may be from the receiver. The transmitter and the receiver may be collectively referred to as a transceiver.

The processing apparatus in the seventh aspect may be a chip. The processor may be implemented by hardware, or may be implemented by software. When being implemented by hardware, the processor may be a logic circuit, an integrated circuit, or the like. When the processor is implemented by software, the processor may be a general-purpose processor and implemented by reading software code stored in the memory. The memory may be integrated inside the processor, or may be located outside the processor and independently exist.

According to an eighth aspect, a computer program product is provided. The computer program product includes: a computer program (which may also be referred to as code or instructions). When the computer program is run, a computer is caused to perform the method in any one of the possible implementations of the first aspect or the second aspect.

According to a ninth aspect, a computer-readable storage medium is provided. The computer-readable storage medium stores a computer program (which may also be referred to as code or instructions). When the computer program is run on a computer, the computer is caused to perform the method in any one of the possible implementations of the first aspect or the second aspect.

### BRIEF DESCRIPTION OF DRAWINGS

FIG. 1 is a diagram of a communication system according to an embodiment of this application;
FIG. 2 is a diagram of a short BSR format or a short truncated BSR format according to an embodiment of this application;
FIG. 3 is a diagram of an extended short BSR format or an extended short truncated BSR format according to an embodiment of this application;
FIG. 4 is a diagram of a long BSR format or a long truncated BSR format according to an embodiment of this application;
FIG. 5 is a diagram of an extended long BSR format or an extended long truncated BSR format according to an embodiment of this application;
FIG. 6 is a diagram of a service processing method according to an embodiment of this application;
FIG. 7 is a diagram of a first content format according to an embodiment of this application;
FIG. 8 is a diagram of a second content format according to an embodiment of this application;
FIG. 9 is a diagram of a first format with a reserved bit according to an embodiment of this application;
FIG. 10 is a diagram of another first format with a reserved bit according to an embodiment of this application;
FIG. 11 is a diagram of another first format with a reserved bit according to an embodiment of this application;
FIG. 12 is a diagram of a manner in which a sending end obtains first information according to an embodiment of this application;
FIG. 13 is an interaction diagram of a manner in which a sending end obtains first information according to an embodiment of this application;
FIG. 14 is a diagram of another manner in which a sending end obtains first information according to an embodiment of this application;
FIG. 15 is an interaction diagram of another manner in which a sending end obtains first information according to an embodiment of this application;
FIG. 16 is a diagram of another service processing method according to an embodiment of this application;
FIG. 17 is a diagram of a third format with third information according to an embodiment of this application;
FIG. 18 is a diagram of another third format with third information according to an embodiment of this application;
FIG. 19 is a diagram of a third format with fourth information according to an embodiment of this application;
FIG. 20 is a diagram of another third format with fourth information according to an embodiment of this application;
FIG. 21 is a diagram of a third format with fifth information according to an embodiment of this application;
FIG. 22 is a diagram of another service processing method according to an embodiment of this application; and
FIG. 23 is a diagram of a structure of a chip according to an embodiment of this application.

### DESCRIPTION OF EMBODIMENTS

The following describes technical solutions of this application with reference to accompanying drawings.

The technical solutions in embodiments of this application are applicable to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or new radio (new radio, NR), or a new system that may appear in the future.

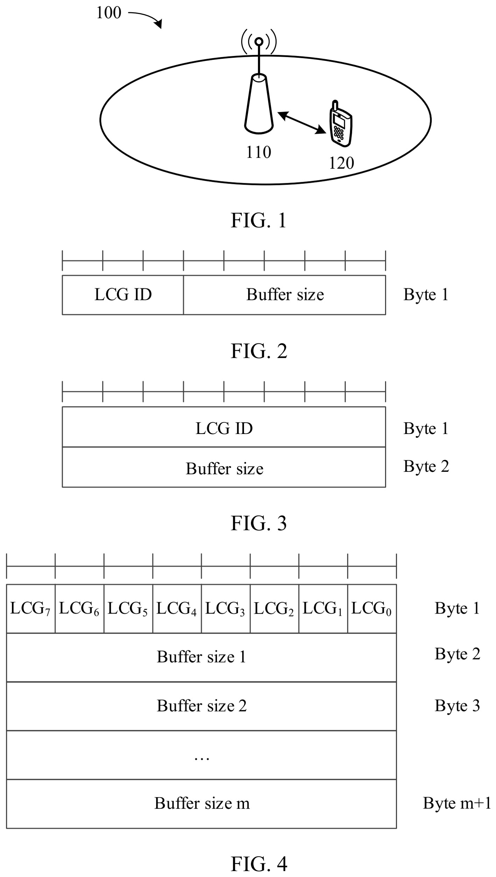

For ease of understanding embodiments of this application, a communication system applicable to embodiments of this application is first described in detail with reference to FIG. 1. FIG. 1 is a diagram of a communication system applicable to sending and receiving methods and apparatuses according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a radio link. A plurality of antennas may be configured for each communication device, for example, the network device 110 or the terminal device 120. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that each communication device may include a plurality of components (such as a processor, a modulator, a multiplexer, a demodulator, a demultiplexer, or an antenna) related to signal sending and receiving. Therefore, the network device 110 may communicate with the terminal device 120 by using a multi-antenna technology.

The terminal device in this embodiment of this application may communicate with one or more core networks through a radio access network (radio access network, RAN). The terminal device may be referred to as an access terminal, user equipment (user equipment, UE), a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal device in a future 5G network, a terminal device in a future evolved public land mobile network (public land mobile network, PLMN), or the like.

The network device in this embodiment of this application may be a device configured to communicate with the terminal device. The network device may be a base transceiver station (base transceiver station, BTS) in a global system for mobile communications (global system for mobile communications, GSM) or code division multiple access (code division multiple access, CDMA), a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, or a network device in a future evolved PLMN network, or the like. This is not limited in this embodiment of this application. For example, the network device is a gNB in an NR system, a transmission point (TRP or TP), one antenna panel or one group of antenna panels (including a plurality of antenna panels) of a base station in a 5G system, or a network node forming a gNB or a transmission point, for example, a baseband unit (BBU) or a distributed unit (distributed unit, DU).

In some deployments, a gNB may include a central unit (centralized unit, CU) and a DU. The gNB may further include a radio frequency unit (radio unit, RU). The CU implements a part of functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a medium access control (media access control, MAC) layer, and a physical (physical, PHY) layer. Because information at the RRC layer eventually becomes information at the PHY layer, or is transformed from information at the PHY layer, in this architecture, higher layer signaling, for example, RRC layer signaling, may also be considered as being sent by the DU, or sent by the DU + the CU. It may be understood that the network device may be a CU node, a DU node, or a device including a CU node and a DU node. In addition, the CU may be used as a network device in the RAN, or may be used as a network device in a core network (core network, CN). This is not limited in this application.

In this embodiment of this application, the terminal device or the network device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (which is also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that communication can be performed according to the method provided in embodiments of this application by running a program of code recording the method provided in embodiments of this application. For example, the execution body of the method provided in embodiments of this application may be a terminal device or a network device, or a functional module that is in a terminal device or a network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are used for storing information. The term "machine-readable medium" may include, but is not limited to, a radio channel, and various other media that can store, include, and/or carry instructions and/or data.

For ease of understanding, related terms in embodiments of this application are first described below.
1. MAC: Medium access control (medium access control, MAC), in a communication process between a sending end and a receiving end, the sending end and the receiving end may adhere to a peer protocol stack principle. The MAC is a protocol stack layer located above a physical layer protocol stack.
2. BSR: The buffer status report (buffer status report, BSR) is used by a sending end to notify a receiving end of a buffer volume of to-be-sent data, so that the receiving end allocates an appropriate uplink grant to the sending end. The BSR is a MAC control element (control element, CE) carried in a MAC protocol data unit (protocol data unit, PDU).
3. Format of a BSR: The format of the BSR may also be referred to as a BSR MAC CE format. The format of the BSR may include: a short BSR format, a short truncated BSR format, an extended short BSR format, an extended short truncated BSR format, a long BSR format, a long truncated BSR format, an extended long BSR format, and an extended long truncated BSR format.

Short BSR format or short truncated BSR format: After a sending end triggers reporting of the BSR, when a MAC PDU including the BSR is generated, uplink data from only one logical channel group (logical channel group, LCG) can be sent. As shown in FIG. 2, a field length of the short BSR format or the short truncated BSR format is eight bits, where the LCG occupies three bits, and a buffered data volume occupies five bits.

Extended short BSR format or extended short truncated BSR format: As shown in FIG. 3, an LCG in the extended short BSR format or the extended short truncated BSR format occupies eight bits, and a buffered data volume occupies eight bits. It may be understood that, compared with the short BSR format or the short truncated BSR format, the extended short BSR format or the extended short truncated BSR format occupies a larger quantity of bits, and has a larger buffered data volume.

Long BSR format or long truncated BSR format: After a sending end triggers reporting of the BSR, when a MAC PDU including the BSR is generated, uplink data from a plurality of LCGs can be sent. As shown in FIG. 4, the long BSR format or the long truncated BSR format may include eight LCG identifiers, and a buffered data volume corresponding to each LCG identifier is eight bits. It may be understood that, if a specific LCG is 0, the LCG has no corresponding buffered data volume, and only seven buffered data volumes are reported by the format.

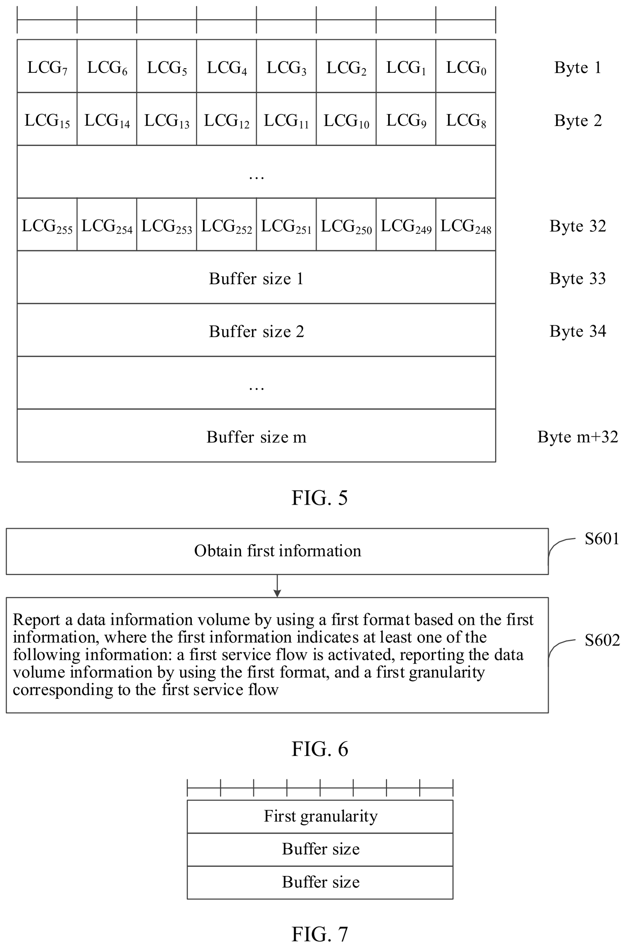

Extended long BSR format or extended long truncated BSR format: As shown in FIG. 5, the extended long BSR format or the extended long truncated BSR format is an extension of the long BSR format or the long truncated BSR format, 256 LCG identifiers may be extended at most, and a buffered data volume corresponding to each LCG identifier is eight bits.

In wireless communication, an XR service may provide brand new visual experience for users, and is widely applied to a variety of fields.

In a data transmission process, the XR service may be used as a common service for data transmission. In a possible implementation, if the XR service uses the short BSR format or the short truncated BSR format for data transmission, because a data volume of the XR service is large, a data volume transmitted by the short BSR format or the short truncated BSR format is limited, and the data volume of the XR service needs to be sent for a plurality of times, a data transmission delay of the XR service is caused, and user experience is affected. In addition, because the current extended short BSR format or extended short truncated BSR format is usually used for an integrated access and backhaul node (integrated accessand bachhaul node, IAB) service, the XR service cannot use the short BSR format or the short truncated BSR format for data transmission.

In view of this, according to a service processing method provided in embodiments of this application, the extended short BSR format or the extended short truncated BSR format is extended, so that the extended short BSR format or the extended short truncated BSR format can be used for data transmission of the XR service, thereby reducing a transmission delay of the XR service caused by a limited data volume transmitted by the short BSR format or the short truncated BSR format, and improving user experience.

Methods in embodiments of this application are described in detail below by using specific embodiments. The following embodiments may be combined with each other or independently implemented, and same or similar concepts or processes may not be described in detail in some embodiments.

A first granularity, a second granularity, and a third granularity in the following embodiments may all include logical channel group (logical channel group, LCG) information, logical channel (logical channel, LCH) information, PDU set information, DRB information, and Data burst information of data volume information reported.

FIG. 6 shows a service processing method according to an embodiment of this application. The method includes the following steps.

S601: Obtain first information.

S602: Report a data information volume by using a first format based on the first information, where the first information indicates at least one of the following information: a first service flow is activated, reporting the data volume information by using the first format, and a first granularity corresponding to the first service flow.

In this embodiment of this application, the first information may represent information indicating that a specific service flow is activated. For example, the first information may represent the information indicating that the first service flow is activated. When a sending end obtains the first information indicating that the first service flow is activated, the sending end may report data to a receiving end by using a BSR format corresponding to the first service flow.

The first service flow may include a service flow in any form. For example, the first service flow may have characteristics such as a non-integer periodicity for an arrival interval, arrival time jitter, a variable packet size, a multi-stream service, and a large data volume. For example, the first service flow may include an XR service flow, a cloud game service flow, and the like.

Because the first service flow does not transmit data continuously, and the first service flow is initiated by the sending end during a particular period of time, the first service flow may have a corresponding activation time point, and the sending end may begin reporting the data volume information of the first service flow after the activation time point. The activation time point may be determined by obtaining the first information. Therefore, the first information may indicate that the first service flow is activated.

In addition, a final objective of the present invention is to cause the sending end to report the data volume information by using the first format. Therefore, the first information may directly indicate to report the data volume information by using the first format.

Further, the first granularities applied to the first service flow may be obtained. After the information is obtained, it may be learned that the first service flow may have been initiated. Therefore, whether to report the data volume information by using the first format may be determined by obtaining the information. In this case, the first information may alternatively be first granularity information corresponding to the first service flow.

The data volume information may indicate data volume range information identified by a data volume index value.

In an implementation, S601 and S602 may be combined for description, and an obtaining action may include configuration, receiving, and the like. This is not limited in this application. That is, if the first information is obtained, or if the first information is configured, or if the first information is received, the data volume information is reported by using the first format. "Based on the first information" in S602 may be understood as "if the first information is obtained, or if the first information is configured, or if the first information is received".

The data volume information in the first format may occupy greater than or equal to eight bits. The first format may include one or more correspondences, any correspondence includes a first granularity and data volume information, and data volume information in any correspondence occupies greater than or equal to eight bits.

Data volume information in any correspondence may occupy eight bits. Data volume information in any correspondence may include data volume information of one first granularity or data volume information of more than one first granularity.

An implementation of the first format corresponding to data volume information of one first granularity may include the following.

### Implementation 1: Extended short BSR format or extended short truncated BSR format.

The extended short BSR format or the extended short truncated BSR format may refer to related description in the embodiment corresponding to FIG. 3, and details are not described again.

It may be understood that the implementation may extend application of the extended short BSR format or the extended short truncated BSR format used for an IAB service to the first service flow, thereby expanding an application scope of the BSR format and improving experience of the first service flow.

An implementation of the first format corresponding to data volume information of more than one first granularity may include the following.

### Implementation 2: Long BSR format or long truncated BSR format.

The long BSR format or the long truncated BSR format may refer to related description in the embodiment corresponding to FIG. 4, and details are not described again.

### Implementation 3: Extended long BSR format or extended long truncated BSR format.

The extended long BSR format or the extended long truncated BSR format may refer to related description in the embodiment corresponding to FIG. 5, and details are not described again.

Procedure example 1: When the sending end obtains the information indicating that the first service flow is activated, or the sending end obtains information indicating to report the data volume information by using the first format, or the sending end obtains the first granularities information corresponding to the first service flow, the sending end may determine whether data of more than one first granularity exists.

If data of one first granularity exists, the sending end may report the data volume information by using the extended short BSR format or the extended short truncated BSR format in the implementation 1; and if data of more than one first granularity exists, the sending end may report the data volume information by using the long BSR format or the long truncated BSR format in the implementation 2.

Procedure example 2: When the sending end obtains the first granularities information corresponding to the first service flow,the sending end may determine whether, within the first granularities indicated by the first granularity information corresponding to the first service flow, there is more than one first granularity that contains data..

If data of one first granularity exists, and the first granularities belong to the first granularities indicated by the first granularities information corresponding to the first service flow, the sending end may report the data volume information by using the extended short BSR format or the extended short truncated BSR format in the implementation 1; and if data of more than one first granularity exists, and the first granularities belong to the first granularities indicated by the first granularities information corresponding to the first service flow, the sending end may report the data volume information by using the long BSR format or the long truncated BSR format in the implementation 2.

Although the foregoing first format in this embodiment of this application includes the existing BSR format, this embodiment of this application is different from a conventional technology in that this embodiment of this application limits, by studying a first service flow model similar to an XR service, a service flow similar to an XR service model to use the format described in this application, where the short BSR format and the short truncated BSR format are not applicable to the service flow similar to the XR service model.

Data volume information in any correspondence may occupy greater than eight bits. Data volume information in any correspondence may include data volume information of one first granularity or data volume information of more than one first granularity.

An implementation of the first format corresponding to data volume information of one first granularity may include the following.

### Implementation 4: First content format.

The first content format may include: one piece of first granularity information and data volume information corresponding to the first granularities information, where the data volume information occupies at least eight bits.

For example, as shown in FIG. 7, the first content format may include one piece of first granularity information, and data volume information of the first granularities information may occupy 16 bits.

An implementation of the first format corresponding to data volume information of more than one first granularity may include the following.

### Implementation 5: Second content format.

The second content format may include: more than one piece of first granularity information and data volume information corresponding to the first granularities information, where data volume information in one correspondence occupies at least eight bits.

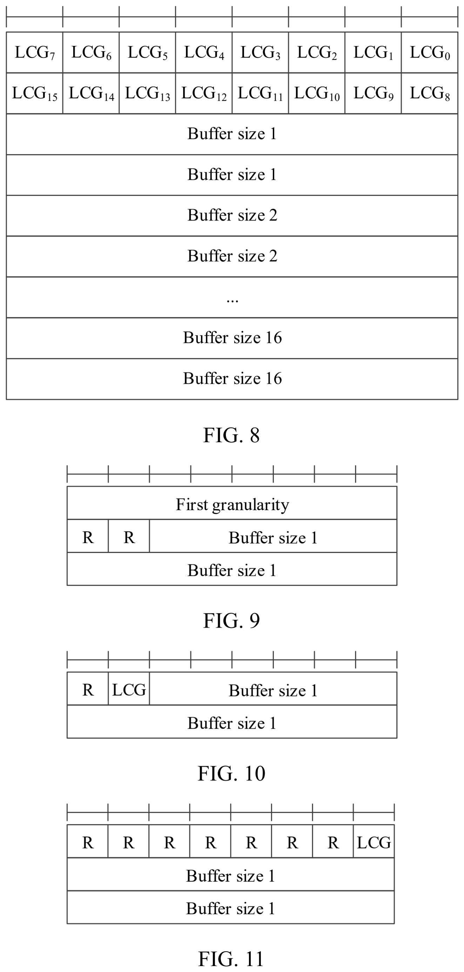

For example, as shown in FIG. 8, the second content format may include more than one piece of first granularity information, for example, include an LCG₀, an LCG₁, ..., and an LCG₁₅. Data volume information corresponding to the LCG₀ is a buffer size 1, data volume information corresponding to the LCG₁ is a buffer size 2, and data volume information corresponding to each piece of first granularity information may occupy 16 bits.

Procedure example 3: When the sending end obtains the information indicating that the first service flow is activated, or the sending end obtains information indicating to report the data volume information by using the first format, or the sending end obtains the first granularities information corresponding to the first service flow, the sending end may determine whether data of more than one first granularity exists.

If data of one first granularity exists, the sending end may report the data information volume by using the first content format in the implementation 4; and if data of more than one first granularity exists, the sending end may report the data information volume by using the second content format in the implementation 5.

Procedure example 4: When the sending end obtains the first granularities information corresponding to the first service flow, the sending end may determine whether data of more than one first granularity among the first granularities indicated by the first granularities information corresponding to the first service flow exists.

If data of one first granularity exists, and the first granularities belong to the first granularities indicated by the first granularities information corresponding to the first service flow, the sending end may report the data information volume by using the first content format in the implementation 4; and if data of more than one first granularity exists, and the first granularities belong to the first granularities indicated by the first granularities information corresponding to the first service flow, the sending end may report the data information volume by using the second content format in the implementation 5.

It may be understood that, before the first format is sent based on the first information, data exists in a logical channel of the sending end, and a buffer status report BSR process may be triggered according to a trigger condition of a BSR.

The condition for triggering the BSR process may include a trigger condition of a regular BSR, a trigger condition of a periodic BSR, a trigger condition of a padding BSR, and the like. When satisfying the trigger condition of the regular BSR, the sending end may trigger the regular BSR. When satisfying the trigger condition of the periodic BSR, the sending end may trigger the periodic BSR. When satisfying the trigger condition of the padding BSR, the sending end may trigger the padding BSR.

For example, if a priority of a logical channel LCH is higher than that of any channel belonging to a specific logical channel group (logical channel group, LCG), and when data needs to be sent, the regular BSR may be triggered; if a periodic BSR timer (periodicBSR- Timer) is configured, and when periodicBSR-Timer expires, the periodic BSR may be triggered; and if resources allocated by the receiving end have remaining capacity after accommodating transmitted data, and residual resources are sufficient to accommodate a BSR MAC CE, the padding BSR may be triggered. For different BSR format reporting scenarios, the trigger condition for triggering the BSR process by the sending end may vary. A specific trigger condition for triggering the BSR process is not limited in this embodiment of this application.

An embodiment of this application further provides a service processing method. In the method, when a first format is a first content format or a second content format, a sending end may send information by using the first content format or the second content format. The method is applicable to any scenario in which the first content format or the second content format may be used for sending information, and is not limited to a scenario in which the sending end needs to obtain first information or second information in the foregoing embodiment. Specific forms of the first content format and the second content format may refer to the description of the foregoing embodiment and are not described again.

In this embodiment of this application, the first format may further include some reserved bits R. The reserved bit R may be a null bit, or may indicate some information. For example, the reserved bit R may indicate first granularity information, delay information, or the like. Information indicated by a specific reserved bit R is not limited in this embodiment of this application. The first granularities information may be understood as LCH information.

In a possible implementation, the first format with a reserved bit R may have the following implementations.

Implementation 1: As shown in FIG. 9, the first format may include one piece of granularity information, the granularity information may correspond to 14-bit data volume information, and the first format may further include two bits R, where the bit R may indicate some information, for example, the bit R may indicate delay information or the like. In this way, a first service flow can transfer more information in a data transmission process, and a transmission capability of the first service flow is enhanced.

Implementation 2: As shown in FIG. 10, the first format may include one piece of granularity information, and the granularity information may occupy a bit position of the bit R. In this way, the granularity information in the first format may not occupy eight bits, thereby saving a quantity of bits of a BSR.

Implementation 3: As shown in FIG. 11, the first format may include one piece of granularity information, the granularity information may occupy one bit, and other bit positions may be occupied by reserved bits R. In this way, the granularity information in the first format may not occupy eight bits, thereby saving a quantity of bits of a BSR.

In a possible implementation, a manner in which the sending end obtains the first information may be received from a receiving end or determined by the sending end.

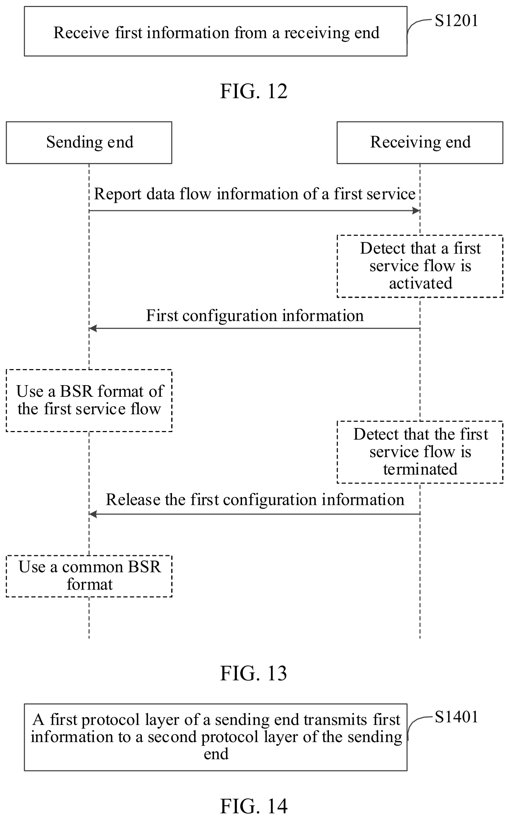

In a possible implementation, FIG. 12 shows the manner in which the sending end obtains the first information.

S1201: Receive the first information from the receiving end. The first information indicates that the first service flow is activated, indicates to report data volume information by using the first format, or indicates a first granularity corresponding to the first service flow.

A corresponding step may include that the receiving end sends the first information.

As shown in FIG. 13, the receiving end may detect, based on data flow information of a first service reported by the sending end, that the first service flow is activated, and send first configuration information to the sending end. The data flow information of the first service reported by the sending end may include service flow periodicity information, service jitter information, service initiation information, service termination information, and the like. After receiving the first configuration information, the sending end may send data by using a BSR format corresponding to the first service flow, where the data includes the data volume information of the first service flow. When the receiving end detects that the first service flow is terminated, the receiving end may send and release the first configuration information to the sending end. In this case, the sending end may send data by using a common BSR format.

It may be understood that the first information is detected by the receiving end, and when the sending end changes the BSR format to report the data, the receiving end may know that the change in the BSR format is caused by the first service flow.

In a possible implementation, FIG. 14 shows the manner in which the sending end obtains the first information.

S1401: A first protocol layer of the sending end transmits the first information to a second protocol layer of the sending end, where the first protocol layer is higher than the second protocol layer. The first information indicates that the first service flow is activated, indicates to report data volume information by using the first format, or indicates a first granularity corresponding to the first service flow.

In a possible implementation, a protocol is usually received at the second protocol layer. That is, the first information may be delivered by a higher layer of the sending end, a MAC layer determines which BSR format to use to send data, and the first format may also be referred to as a BSR format.

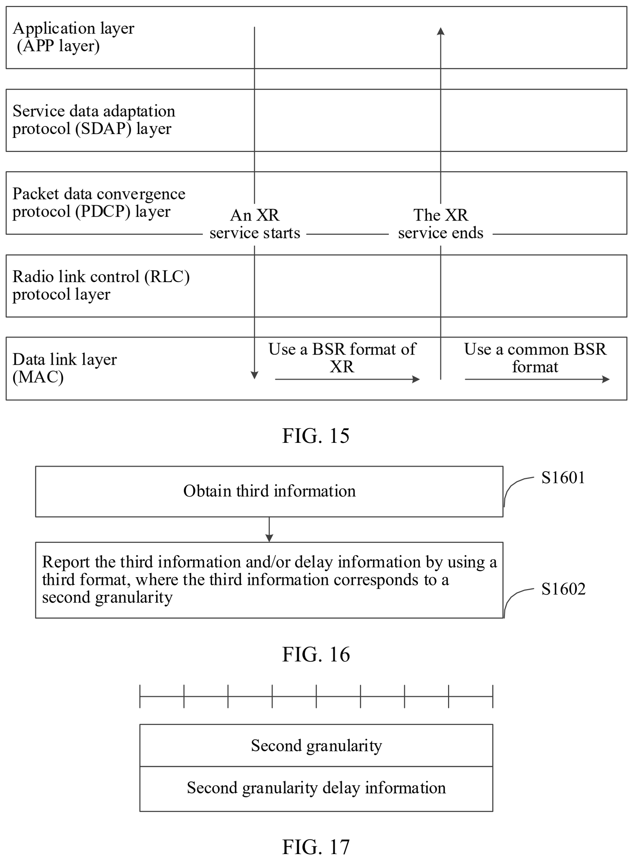

As shown in Figure 15, when a first service flow of an application layer is activated, the application layer may deliver, to a service data adaptation protocol (service data adaptation protocol, SDAP) layer, information indicating that the first service flow is activated, the information passes through a packet data convergence protocol (packet data convergence protocol, PDCP) layer and a radio link control (radio link control, RLC) protocol layer, and finally, the MAC layer may receive the information and detect that the first service flow is activated. In this case, the sending end may send the data to the receiving end by using the BSR format corresponding to the first service flow. The application layer may also be referred to as the first protocol layer, and the MAC layer may also be referred to as the second protocol layer.

When the first service flow of the application layer is terminated, the application layer may send, to the SDAP layer, information indicating that the first service flow is terminated, the information passes through the PDCP layer and the RLC layer, and finally, the MAC layer may receive the information and detect that the first service flow is terminated. In this case, the sending end may send the data to the receiving end by using the common BSR format.

It may be understood that, when a delay of the first service flow is large, it may make a user feel dizzy and affect user experience. Therefore, the first service flow is delay-sensitive, and the first service flow may require completion of data transmission within specified delay time. In a possible implementation, the first format reported carries information related to the delay, so that the receiving end can preferentially allocate resources to the first service flow based on the delay information, thereby reducing the delay of the first service flow, and improving the user experience. In addition, in a possible implementation, the delay information of the first service flow is directly reported, so that the receiving end can preferentially allocate resources to the first service flow based on the delay information, thereby reducing the transmission delay of the first service flow.

FIG. 16 shows another service processing method according to an embodiment of this application. The method includes the following steps.

S1601: Obtain third information.

S1602: Report the third information and/or delay information by using a third format, where the third information corresponds to a second granularity.

In this embodiment of this application, in an implementation, the third format may be a first format, where the first format is described in the embodiment corresponding to FIG. 6. In an implementation, the third format carries the third information and the delay information.

In this embodiment of this application, the third information indicates at least one of the following content:
a first indication, where the first indication indicates that delay information of the second granularity does not exist or is not reported;
a second indication, where the second indication indicates that delay information of the second granularity exists or is reported; or
the second granularity corresponding to the delay information.

In an implementation, the third information may indicate at least one of the first indication, the second indication, and the second granularity corresponding to the delay information. It may be understood that the third information may have a value of at least one of the first indication, the second indication, or the second granularity corresponding to the delay information.

In a possible implementation, the value of the third information includes at least one of the following: the first indication; the second indication; or the second granularity corresponding to the delay information. The first indication indicates that the delay information of the second granularity does not exist or is not reported. The second indication indicates that the delay information of the second granularity exists or is reported.

In a possible implementation, the third information may directly indicate the second granularity, the second granularity indicated by the third information has the corresponding delay information, and the third information may have a value of the first indication or the second indication, where the first indication indicates that the delay information of the second granularity does not exist or is not reported, and the second indication indicates that the delay information of the second granularity exists or is reported.

It may be understood that the third format may include one or more second granularities.

An implementation of the third format corresponding to one second granularity may include the following.

Implementation 1: FIG. 17 shows the third format with the third information.

As shown in FIG. 17, the third information may indicate the second granularity, and the third format may include one second granularity, where the second granularity may correspond to one piece of delay information.

The third information may have the value of the first indication. For example, the first indication may have a value of 0. For example, when a value of the second granularity is 0, it may indicate not to report the delay information corresponding to the second granularity.

The third information may alternatively have the value of the second indication. For example, the second indication may have a value of 1. For example, when the value of the second granularity is 1, it may indicate to report the delay information corresponding to the second granularity.

The third information may further indicate the second granularity of the delay information reported. For example, when the third information exists, it indicates that the delay information corresponding to the second granularity is reported; or when the third information does not exist, it indicates that no delay information corresponding to the second granularity is reported.

An implementation of the third format corresponding to more than one second granularity may include the following.

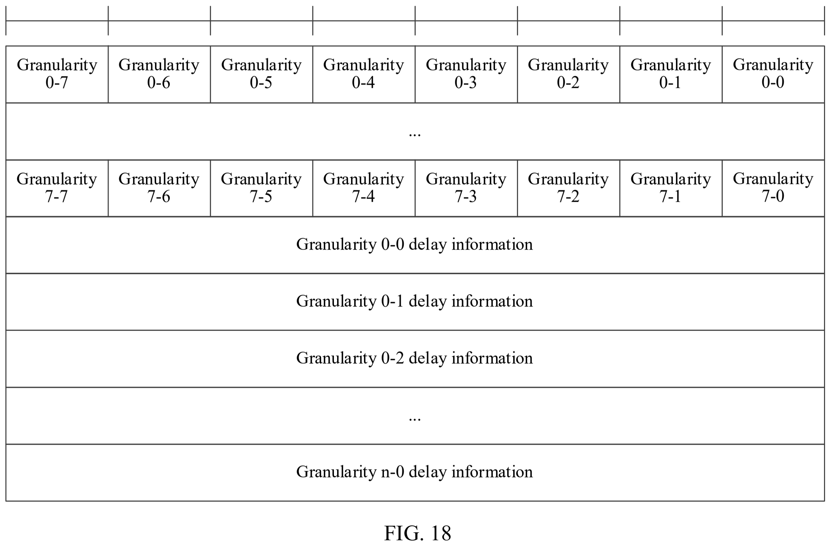

Implementation 2: FIG. 18 shows the third format with the third information.

As shown in FIG. 18, the third information may indicate the second granularity, and the third format may include a plurality of second granularities. The third information may correspond to any one of a granularity 0-0 to a granularity 0-7, for example, including a granularity 0-0 to a granularity 0-7, a granularity 7-0 to a granularity 7-7, and the like. Each second granularity may have corresponding delay information. For example, delay information corresponding to the granularity 0-0 is granularity 0-0 delay information, and delay information corresponding to the granularity 0-7 is granularity 0-7 delay information.

The third information may correspond to any one of a granularity 0-0 to a granularity 0-7, the granularity 0-0 is used as an example, and the third information may indicate granularity information of the granularity 0-0, in other words, the third information is a field of the granularity 0-0.

The third information may have the value of the first indication. For example, the first indication may have a value of 0. For example, when a value of the granularity 0-0 is 0, it may indicate not to report the delay information of the granularity 0-0.

The third information may alternatively have the value of the second indication. For example, the second indication may have a value of 1. For example, when a value of the granularity 0-0 is 1, it may indicate to report the delay information of the granularity 0-0.

The third information may further indicate the second granularity of the delay information reported. For example, when the third information exists, it indicates that the delay information corresponding to the granularity 0-0 is reported; or when the third information does not exist, it indicates that no delay information corresponding to the granularity 0-0 is reported.

In this embodiment of this application, the third format may further include fourth information, and the fourth information corresponds to at least one second granularity.

In this embodiment of this application, the fourth information indicates at least one of the following content:
a third indication, where the third indication indicates that delay information of the at least one second granularity does not exist or is not reported; or
a fourth indication, where the fourth indication indicates that delay information of the at least one second granularity exists or is reported.

In an implementation, the fourth information may indicate at least one of the third indication and the fourth indication. It may be understood that the fourth information may have a value of at least one of the third indication and the fourth indication.

In a possible implementation, the value of the fourth information includes at least one of the following: the third indication; or the fourth indication. The third indication indicates that the delay information of the second granularity does not exist or is not reported. The fourth indication indicates that the delay information of the second granularity exists or is reported.

The fourth information corresponds to a plurality of second granularities. It may be understood that the fourth information corresponds to one granularity set, and the granularity set may be one granularity.

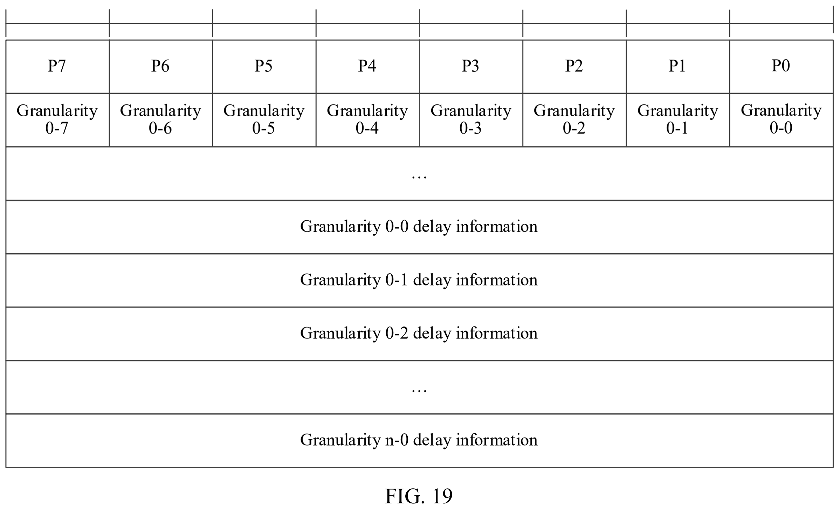

Implementation 3: FIG. 19 shows the third format with the fourth information.

As shown in FIG. 19, the third format may include a plurality of pieces of fourth information respectively corresponding to P0 to P7 in the figure. P0 is used as an example, and P0 may correspond to a plurality of second granularities, including a granularity 0-0 to a granularity 0-7. Each second granularity may have corresponding delay information. For example, delay information corresponding to the granularity 0-0 is granularity 0-0 delay information, and delay information corresponding to the granularity 0-7 is granularity 0-7 delay information.

P0 is used as an example, and the fourth information may be understood as a total indication of a granularity 0-0 to a granularity 0-7, indicating that granularity information of the granularity 0-0 to the granularity 0-7 does not exist.

The fourth information may have the value of the third indication. For example, the first indication may have a value of 0. That is, when a value of P0 is 0, delay information of the granularity 0-0 to the granularity 0-7 is not reported.

The fourth information may alternatively have the value of the fourth indication. For example, the second indication may have a value of 1. That is, when a value of P0 is 1, delay information of the granularity 0-0 to the granularity 0-7 is reported.

The fourth information may further indicate a third granularity of the delay information reported. In an implementation, the third granularity is a collective term of a set of the granularity 0-0 to the granularity 0-7. For example, when the fourth information exists, it indicates that the delay information corresponding to the third granularity is reported; or when the fourth information does not exist, it indicates that the delay information corresponding to the third granularity is not reported.

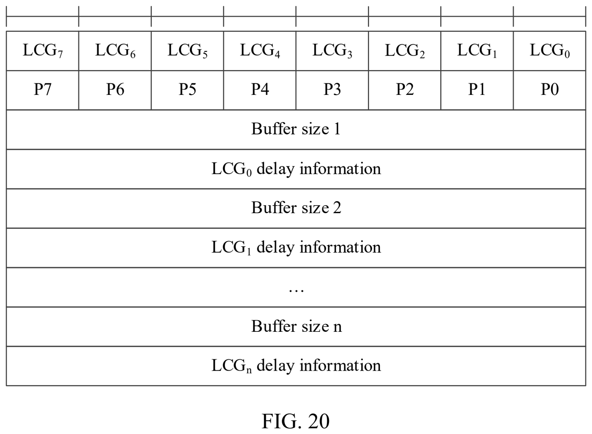

Implementation 4: FIG. 20 shows the third format with the fourth information.

As shown in FIG. 20, the third format may include a plurality of pieces of fourth information respectively including P0 to P7, and each piece of fourth information may indicate delay information corresponding to a first granularity. P0 is used as an example, and the fourth information may indicate delay information of an LCG₀.

The fourth information may have the value of the third indication. For example, the third indication may have a value of 0. When a value of P0 is 0, delay information of a first granularity LCG₀ is not reported.

The fourth information may have the value of the fourth indication. For example, the fourth indication may have a value of 1. When a value of P0 is 1, delay information of a first granularity LCG₀ may be reported.

In this embodiment of this application, the third format may further include fifth information, and the fifth information corresponds to at least one first granularity.

In this embodiment of this application, the fifth information indicates at least one of the following content:
a fifth indication, where the fifth indication indicates that data volume information of a first granularity indicated by the fifth information does not exist or is not reported; or
a sixth indication, where the sixth indication indicates that data volume information of a first granularity indicated by the fifth information exists or is reported.

In an implementation, the fifth information may indicate at least one of the fifth indication and the sixth indication. It may be understood that the fifth information may have a value of at least one of the fifth indication and the sixth indication.

In a possible implementation, the value of the fifth information includes at least one of the following: the fifth indication; the sixth indication; or first granularity information of data volume information reported. The fifth indication indicates that the data volume information of the first granularities indicated by the fifth information does not exist or is not reported. The sixth indication indicates that the data volume information of the first granularities indicated by the fifth information exists or is reported.

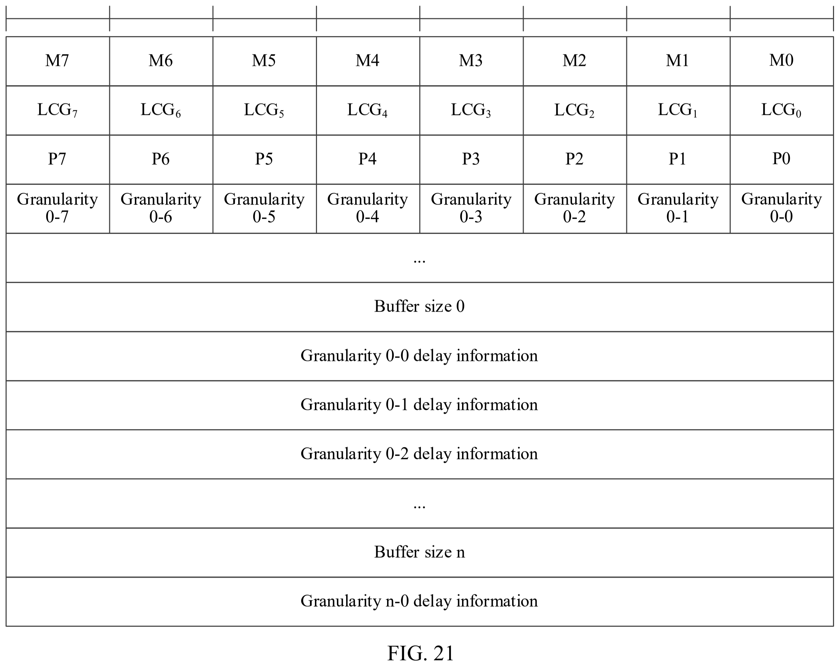

Implementation 5: FIG. 21 shows the third format with the fifth information.

As shown in FIG. 21, the third format may include a plurality of pieces of fifth information respectively including M0 to M7, and each piece of fifth information may indicate whether to report data volume information corresponding to a first granularity. For example, granularity information includes an LCG₀ to an LCG₇. M0 is used as an example, and the fifth information may indicate whether to report data volume information of a first granularity LCG₀.

The fifth information may have the value of the fifth indication. For example, the fifth indication may have a value of 0. When a value of M0 is 0, the data volume information of the first granularities LCG₀ may not be reported.

The fifth information may have the value of the sixth indication. For example, the sixth indication may have a value of 1. When a value of P0 is 1, the data volume information of the first granularities LCG₀ may be reported.

It may be understood that, in FIG. 21, the third format may include a granularity 0-0 to a granularity 0-7, delay information, and P0-P1, or may not include a granularity 0-0 to a granularity 0-7, delay information, and P0-P1. This is not limited in this embodiment of this application.

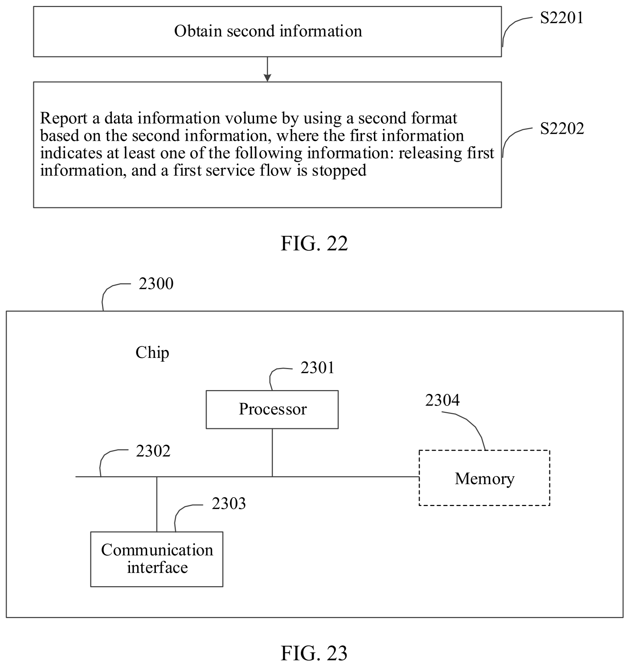

FIG. 22 shows another service processing method according to an embodiment of this application. The method includes the following steps.

S2201: Obtain second information.

S2202: Report a data information volume by using a second format based on the second information, where the second information indicates at least one of the following information: releasing first information, and a first service flow is stopped.

In this embodiment of this application, the second information may represent information indicating that a specific service flow is stopped. For example, the second information may represent the information indicating that the first service flow is stopped. When a sending end obtains the second information indicating that the first service flow is stopped, the sending end may report data to a receiving end by using the second format.

A used BSR format may be determined for the second format based on service needs. For example, the second format may include a short BSR format or a short truncated BSR format, an extended short BSR format or an extended short truncated BSR format, a long BSR format or a long truncated BSR format, an extended long BSR format or an extended long truncated BSR format, and the like. Alternatively, the second format may be any BSR format. For example, the second format may be the same as a first format. A specific second format used for sending data is not limited in this embodiment of this application.

It may be understood that the second format may be the same as or different from the first format.

A case in which the second format is the same as the first format may include the following.

Case 1: In the foregoing procedure example 1 and procedure example 2, after the sending end obtains the first information, and if data of more than one first granularity exists, the sending end may report the data volume information by using the long BSR format or the long truncated BSR format.

After the sending end obtains the second information, and if data of more than one first granularity exists, the sending end may report the data volume information by using the long BSR format or the long truncated BSR format.

The foregoing long BSR format or long truncated BSR format may be an implementation form of the first format or an implementation form of the second format. Therefore, the second format may be the same as the first format.

A case in which the second format is different from the first format may include the following.

Case 1: In the foregoing implementation 1 of the first format, procedure example 1, and procedure example 2, after the sending end obtains the first information, the sending end may report the data volume information by using the extended short BSR format or the extended short truncated BSR format.

After the sending end obtains the second information, the sending end may report the data volume information by using the short BSR format or the short truncated BSR format.

The extended short BSR format or the extended short truncated BSR format is an implementation form of the first format, and the short BSR format or the short truncated BSR format is an implementation form of the second format. Therefore, the second format may be different from the first format.

Case 2: In the foregoing procedure example 3, after the sending end obtains the first information, and if data of one first granularity exists, the sending end may report the data information volume by using the first content format; or if data of more than one first granularity exists, the sending end may report the data information volume by using the second content format.

After the sending end obtains the second information, and if data of one first granularity exists, the sending end may report the data information volume by using the short BSR format or the short truncated BSR format; or if data of more than one first granularity exists, the sending end may report the data information volume by using the long BSR format or the long truncated BSR format.

The foregoing first content format and second content format are implementation forms of the first format, and the short BSR format or the short truncated BSR format and the long BSR format or the long truncated BSR format are implementation forms of the second format. Therefore, the second format may be different from the first format.

Case 3: In the foregoing procedure example 4, after the sending end obtains the first information, and if data of one first granularity exists, and the first granularities belong to a first granularity indicated by first granularity information corresponding to the first service flow, the sending end may report the data information volume by using the first content format; or if data of more than one first granularity exists, and the first granularities belong to a first granularity indicated by first granularity information corresponding to the first service flow, the sending end may report the data information volume by using the second content format.

After the sending end obtains the second information, and if data of one first granularity exists, the sending end may report the data information volume by using the short BSR format or the short truncated BSR format; or if data of more than one first granularity exists, the sending end may report the data information volume by using the long BSR format or the long truncated BSR format.

The foregoing first content format and second content format are implementation forms of the first format, and the short BSR format or the short truncated BSR format and the long BSR format or the long truncated BSR format are implementation forms of the second format. Therefore, the second format may be different from the first format.

A manner in which the sending end obtains the second information may be detected by the receiving end or detected by the sending end. In other words, the manner in which the sending end obtains the second information may be similar to the manner in which the sending end obtains the first information. For the specific manner in which the sending end obtains the second information, refer to related descriptions in the embodiments corresponding to FIG. 12 and FIG. 14, and details are not described again.

A manner of releasing the first information may be explicit or implicit. The explicit manner may include releasing through radio resource control (radio resource control, RRC) signaling, where a specific data format may be steuprelease, and releasing is performed through release. The implicit manner may include that an implementation of the first information is not configured, where need code of the first information is need R. It may be understood that releasing the first information in the implicit manner may save signaling.

In embodiments of this application, an apparatus for implementing a service processing method may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division during actual implementation.

FIG. 23 is a diagram of a structure of a chip according to an embodiment of this application. The chip 2300 includes one or at least two (including two) processors 2301, a communication line 2302, a communication interface 2303, and a memory 2304.

In some implementations, the memory 2304 stores the following element: an executable module or a data structure, a subset thereof, or an extension set thereof.

The method described in the foregoing embodiments of this application is applicable to the processor 2301 or implemented by the processor 2301. The processor 2301 may be an integrated circuit chip having a signal processing capability. In an implementation process, steps in the foregoing method may be completed by using a hardware integrated logical circuit in the processor 2301, or by using instructions in a form of software. The foregoing processor 2301 may be a general-purpose processor (for example, a microprocessor or a conventional processor), a digital signal processor (digital signal processing, DSP), an application-specific integrated circuit (application specific integrated circuit, ASIC), a field programmable gate array (field-programmable gate array, FPGA) or another programmable logic device, a discrete gate, a transistor logic device, or a discrete hardware component. The processor 2301 may implement or perform various processing-related methods, steps, and logical block diagrams disclosed in embodiments of this application.

The steps of the methods disclosed with reference to embodiments of this application may be directly performed and completed by using a hardware decoding processor, or may be performed and completed by using a combination of hardware and software modules in a decoding processor. The software module may be located in a mature storage medium in the art, such as a random access memory, a read-only memory, a programmable read-only memory, or an electrically erasable programmable read-only memory (electrically erasable programmable read only memory, EEPROM). The storage medium is located in the memory 2304, and the processor 2301 reads information in the memory 2304 and completes the steps of the foregoing method in combination with hardware thereof.

The processor 2301, the memory 2304, and the communication interface 2303 may communicate with each other through the communication line 2302.

In the foregoing embodiments, instructions stored in the memory for execution by the processor may be implemented in a form of a computer program product. The computer program product may be pre-written into the memory, or may be downloaded and installed in the memory in a form of software.

An embodiment of this application further provides a computer program product including one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer or a data storage device, such as a server or a data center, integrating one or more usable media. For example, the usable medium may include a magnetic medium (for example, a floppy disk, a hard disk drive, or a magnetic tape), an optical medium (for example, a digital versatile disc (digital versatile disc, DVD)), a semiconductor medium (for example, a solid-state disk (solid state disk, SSD)), or the like.

An embodiment of this application further provides a computer-readable storage medium. The method described in the foregoing embodiments may be fully or partially implemented by software, hardware, firmware, or any combination thereof. The computer-readable medium may include a computer storage medium and a communication medium, and may further include any medium that can transmit a computer program from one place to another. The storage medium may be any target medium accessible by a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, the optical fiber cable, the twisted pair, the DSL or the wireless technologies such as infrared ray, radio, and microwave are included in the definition of the medium. A magnetic disk and an optical disc used in this specification include a compact disc (CD), a laser disc, an optical disc, a digital versatile disc (digital versatile disc, DVD), a floppy disk, and a blue ray disc, where the magnetic disk usually reproduces data in a magnetic manner, and the optical disc reproduces data optically by using laser.

Embodiments of this application are described with reference to the flowcharts and/or block diagrams of the method, the device (system), and the computer program product according to embodiments of this application. It should be understood that computer program instructions may be used for implementing each procedure and/or block in the flowcharts and/or block diagrams and a combination of procedures and/or blocks in the flowcharts and/or block diagrams. These computer program instructions may be provided to a general-purpose computer, a dedicated computer, an embedded processor, or a processing unit of another programmable data processing device to generate a machine, so that an apparatus configured to implement functions specified in one or more procedures in the flowcharts and/or one or more blocks in the block diagrams is generated by using instructions executed by the computer or the processing unit of the another programmable data processing device.

## Claims

1. A service processing method, wherein the method comprises:
obtaining first information; and
reporting a data information volume by using a first format based on the first information, wherein
the first information indicates at least one of the following information: a first service flow is activated, reporting the data volume information by using the first format, and a first granularity corresponding to the first service flow.

2. The method according to claim 1, wherein the data volume information in the first format occupies greater than or equal to eight bits; and the first format comprises one or more correspondences, and any one of the correspondences comprises a first granularity and data volume information.

3. The method according to claim 1 or 2, wherein data volume information in any one of the correspondences occupies greater than or equal to eight bits.

4. The method according to any one of claims 1 to 3, wherein the first format comprises any one of the following: an extended short BSR format, an extended short truncated BSR format, a long BSR format, and a long truncated BSR format.

5. The method according to any one of claims 1 to 4, wherein the first format indicates at least any one of the following information:
first granularity information;
null bit information;
third information; and
delay information, wherein
the third information corresponds to a second granularity.

6. The method according to claim 5, wherein the third information indicates at least one of the following content:
a first indication, wherein the first indication indicates that delay information of the second granularity does not exist or is not reported;
a second indication, wherein the second indication indicates that delay information of the second granularity exists or is reported; or
the second granularity of the delay information reported.

7. The method according to claim 5 or 6, wherein the first format comprises fourth information, wherein the fourth information corresponds to at least one second granularity, and the fourth information indicates at least one of the following content:
a third indication, wherein the third indication indicates that delay information of the at least one second granularity does not exist or is not reported; or
a fourth indication, wherein the fourth indication indicates that delay information of the at least one second granularity exists or is reported.

8. The method according to any one of claims 1 to 7, wherein the reporting a data information volume by using a first format comprises:
reporting the data information volume by using the first format based on a first condition, wherein
if the first condition is that data of one first granularity exists, a report in the first format comprises one first correspondence; or
if the first condition is that data of a plurality of first granularities exists, a report in the first format comprises a plurality of first correspondences, wherein
any one of the first correspondences comprises one first granularity and data volume information.

9. The method according to claim 8, wherein the first condition comprises: determining whether data of more than one first granularity among the first granularities corresponding to the first service flow indicated by the first information exists, wherein
when the first information indicates that data of one first granularity among the first granularities corresponding to the first service flow exists, the first format comprising one first correspondence is used to report the data information volume; and
when the first information indicates that data of a plurality of first granularities among the first granularities corresponding to the first service flow exists, the first format comprising a plurality of first correspondences is used to report the data information volume.

10. The method according to any one of claims 1 to 9, wherein the method further comprises:
obtaining second information; and
reporting the data information volume by using a second format based on the second information, wherein
the second information indicates at least one of the following information: releasing the first information, and the first service flow is stopped.

11. The method according to claim 10, wherein the reporting the data information volume by using a second format comprises:
reporting the data information volume by using the second format based on a second condition, wherein
if the second condition is that data of one first granularity exists, a report in the second format comprises one second correspondence; or
if the second condition is that data of a plurality of first granularities exists, a report in the second format comprises a plurality of second correspondences, wherein
any one of the second correspondences comprises one first granularity and data volume information.

12. The method according to any one of claims 1 to 11, wherein a manner of releasing the first information comprises: setting need code of the first information to need R.

13. The method according to any one of claims 1 to 12, wherein the first information is received from a receiving end.

14. The method according to any one of claims 1 to 12, wherein the first information is determined by a sending end; and
the first information is transmitted by a first protocol layer of the sending end to a second protocol layer of the sending end, wherein the first protocol layer is higher than the second protocol layer.

15. A service processing method, wherein the method comprises:
obtaining third information; and
reporting the third information and/or delay information by using a third format, wherein
the third information corresponds to a second granularity.

16. The method according to claim 15, wherein the third information indicates at least one of the following content:
a first indication, wherein the first indication indicates that delay information of the second granularity does not exist or is not reported;
a second indication, wherein the second indication indicates that delay information of the second granularity exists or is reported; or
the second granularity corresponding to the delay information.

17. The method according to claim 15 or 16, wherein the third format comprises fourth information, wherein the fourth information corresponds to at least one second granularity, and the fourth information indicates at least one of the following content:
a third indication, wherein the third indication indicates that delay information of the at least one second granularity does not exist or is not reported; or
a fourth indication, wherein the fourth indication indicates that delay information of the at least one second granularity exists or is reported.

18. The method according to any one of claims 15 to 17, wherein the third format further comprises fifth information and data volume information, wherein the fifth information corresponds to at least one first granularity.

19. The method according to claim 18, wherein the fifth information indicates at least one of the following content:
a fifth indication, wherein the fifth indication indicates that data volume information of a first granularity indicated by the fifth information does not exist or is not reported; or
a sixth indication, wherein the sixth indication indicates that data volume information of a first granularity indicated by the fifth information exists or is reported.

20. A service processing apparatus, comprising: a processor, wherein the processor is coupled to a memory, the memory is configured to store a computer program, and when the processor invokes the computer program, the apparatus is caused to perform the method according to any one of claims 1 to 19.

21. A computer-readable storage medium, configured to store a computer program, wherein the computer program comprises instructions for implementing the method according to any one of claims 1 to 19.

22. A computer program product, wherein the computer program product comprises computer program code, and when the computer program code is run on a computer, the computer is caused to implement the method according to any one of claims 1 to 19.
